# EUROPÄISCHE PATENTSCHRIFT

(11) **EP 2 468 150 B1**
(45) Veröffentlichungstag und Bekanntmachung des Hinweises auf die Patenterteilung: **02.05.2018**
(21) Anmeldenummer: 11193908.8
(22) Anmeldetag: 16.12.2011
(51) Int. Cl.: A47J 27/04, F24C 15/16

(54) **Gargerät mit Dampfbehandlungseinsatz**
Cooking appliance with steam treatment insert
Appareil de cuisson avec insert de traitement à la vapeur

(30) Priorität: 22.12.2010 DE 102010063876
(43) Veröffentlichungstag der Anmeldung: 27.06.2012
(73) Patentinhaber: BSH Hausgeräte GmbH, 81739 München (DE)
(72) Erfinder: Bleier, Konrad, 76599 Weisenbach (DE); Hintermayer, Manfred, 76185 Karlsruhe (DE); Theine, Markus, 83355 Grabenstätt (DE)

(56) Entgegenhaltungen:
- EP-A1- 2 431 667
- DE-A1- 3 841 074
- GB-A- 1 211 540
- GB-A- 2 198 631
- US-A- 4 426 923
- US-A- 4 922 079
- US-A1- 2007 251 936
- US-B1- 6 875 959

## Beschreibung

Die Erfindung betrifft ein Gargerät mit einem in dessen Garraum eingesetzten Dampfbehandlungseinsatz, wobei der Dampfbehandlungseinsatz ein Unterteil und einen Deckel zum dampfdichten Abdecken des Unterteils, eine Heizung, einen mit der Heizung verbundenen elektrischen Anschluss und einen offenen Flüssigkeitsbehälter aufweist.

Es sind geschlossene Dampfgareinsätze zum Einsatz in einem Garraum eines Gargeräts bekannt, wobei solche Dampfgareinsätze eine Gargutablage und einen offenen Flüssigkeitsbehälter aufweisen. Eine Aufheizung von in dem Flüssigkeitsbehälter befindlichem Wasser geschieht durch eine externe Aufheizung mittels eines oder mehrerer Heizkörper des Garraums (z.B. mittels eines Unterhitzeheizkörpers). Ein Energieaufwand ist dabei vergleichsweise hoch.

DE 10 2005 046 011 A1 betrifft eine Vorrichtung zum Erwärmen und Garen von Speisen und Nahrungsmitteln mit einem geschlossenen Gargutbehälter für das Gargut, der ein Boden- und ein Deckelteil aufweist, mit einer Vorrichtung zum Erzeugen von Dampf, mit einer Zuleitungsvorrichtung, mittels der der Dampf in den Gargutbehälter leitbar ist. Dazu ist der Gargutbehälter an eine Zuleitung zum Einleiten des Dampfes und an einen Temperaturfühler anschließbar ausgebildet, wobei ein Temperaturfühler mit einer Steuerungseinrichtung in Verbindung steht, mittels der die Steuerung der Dampfzuleitung in den Gargutbehälter zur Durchführung des Gar- bzw. Erwärmungsprozesses durchgeführt wird. Ein besonderes Schüsselelement stellt dabei eine Kupplungsvorrichtung dar, um alle funktional wesentlichen Bauelemente in den Gargutbehälter einzukuppeln. Dies geschieht beim Einschieben des Gargutbehälters in die Garvorrichtung. Der Gargutbehälter kann somit nach dem Befüllen mit den zu garenden Speisen direkt an unterschiedliche Dampfgarsysteme angeschlossen werden, ohne dass der Gargutbehälter noch mit separaten Luftzuführungsleitungen verbunden werden muss und ohne dass noch ein separater Temperaturfühler in den Gargutbehälter eingeführt werden muss. Die Gargutbehälter weisen dazu in ihrem rückseitigen Bereich eine Öffnung auf im Deckelteil an. In der Kupplungsvorrichtung sind Zu- und Ableitungen für den Dampf sowie ein Temperaturfühler integriert angeordnet.

DE 38 41 074 A1 offenbart eine Vorrichtung zum Erhitzen insbesondere von Nahrungsmitteln, welche ein glockenförmiges Gehäuse enthält, das an Handgriffen als Haube über das zu erhitzende Gut stülpbar ist, und mit einer Heizeinrichtung zum Beheizen des von dem Gehäuse und einer Abdeckung der offenen Gehäuseseite eingeschlossenen Raumes ausgerüstet ist. Das Gehäuse besitzt einen Anschluss für eine Dampfleitung zum Zuführen von Dampf in das Innere des Gehäuses, innenseitig im Bereich des Gehäusebodens einen elektrischen Strahlungsheizkörper, und einen den Strahlungsheizkörper in Abhängigkeit von der Temperatur im Inneren des Gehäuses schaltenden Thermostatregler.

EP 2 431 667 A1 offenbart einen beheizbaren Einschub-Garraumteiler, wobei eine Oberseite des Einschub-Garraumteilers als eine Gargutaufnahme ausgebildet ist.

Es ist die **Aufgabe** der vorliegenden Erfindung, eine verbesserte Möglichkeit zum Dampfgaren bereitzustellen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Gargerät mit einem in dessen Garraum eingesetzten Dampfbehandlungseinsatz, wobei der Dampfbehandlungseinsatz ein Unterteil und einen Deckel zum dampfdichten Abdecken des Unterteils, eine Heizung, einen mit der Heizung verbundenen, elektrischen Anschluss und einen offenen Flüssigkeitsbehälter aufweist, wobei das Gargerät eine Energieversorgungseinrichtung zum Versorgen des Dampfbehandlungseinsatzes mit einem elektrischen Signal aufweist, die Heizung eine Flüssigkeitsbehälter-Heizung zum Verdampfen von in dem Flüssigkeitsbehälter befindlicher Flüssigkeit ist und der Dampfbehandlungseinsatz frei von Dampfzuführungen ist.

Dieses Gargerät mit einem in dessen Garraum eingesetzten Dampfbehandlungseinsatz weist den Vorteil auf, dass ein vollwertiger Dampfgarer, nämlich der Dampfbehandlungseinsatz, als Zubehör ergänzbar ist. Der Dampf wird dabei direkt in dem Dampfbehandlungseinsatz erzeugt. Der Dampfbehandlungseinsatz ist somit Dampferzeuger und Gargutbehälter in einem. Auf vergleichsweise großvolumige und aufwändige Dampfzuführungen kann verzichtet werden. Insbesondere braucht der Dampfbehandlungseinsatz auch nicht über eine Dampfleitung mit Dampf versorgt zu werden und folglich auch keinen Dampfanschluss oder Dampfeinlassöffnung aufzuweisen.

Der Garraum wird ferner mit wenig Dampf belastet, was den Garraum und die im Garraum befindlichen Komponenten insbesondere vor einer Korrosion durch Wasser und vor einer Verschmutzung, z.B. durch Gargutbestandteile wie Öle, schützt. Die im Vergleich zu dem Garraum geringe Größe des Dampfbehandlungseinsatzes ergibt ein effizientes, schnelles und energiesparendes Dampfsystem. Die Größe des Dampfbehandlungseinsatzes kann auf das Volumen des mit Dampf zu behandelnden Garguts abgestimmt werden. Der Dampfbehandlungseinsatz ist leicht reinigbar, eine Spülmaschinentauglichkeit ist möglich.

Die Heizung ist somit dazu eingerichtet und ausgelegt, Flüssigkeit in dem Flüssigkeitsbehälter zu verdampfen. Die Heizung kann einen oder mehrere Heizkörper aufweisen.

Der Flüssigkeitsbehälter ist vorzugsweise ein schalenförmiger Flüssigkeitsbehälter.

Die Gargutablage ist bevorzugt eine oberhalb des Flüssigkeitsbehälters angeordnete, dampfdurchlässige Ablage, z.B. ein Gitterrost oder eine gelöcherte oder perforierte Platte.

Der elektrische Anschluss oder die elektrische Kontaktierungseinheit dienen zumindest zur Versorgung der Heizung mit elektrischer Energie. Der elektrische Anschluss kann auch mindestens einen Datenübertragungskontakt aufweisen, z.B. zum Abgreifen von Sensorsignalen.

Es ist eine für eine effektive Aufheizung der Flüssigkeit vorteilhafte Ausgestaltung, dass die Heizung in dem Flüssigkeitsbehälter oder an einer Unterseite des Flüssigkeitsbehälters angeordnet ist.

Die Heizung ist vorzugsweise als mindestens eine Flächenheizung ausgebildet, welche den Flüssigkeitsbehälter, insbesondere dessen Boden, flächig heizen kann. Die Flächenheizung kann insbesondere eine Dünnschicht- oder Dickschichtheizung sein. Es ist eine Weiterbildung, dass der Flüssigkeitsbehälter mit der Flächenheizung beschichtet ist.

Alternativ sind z.B. mindestens ein Rohrheizkörper oder mindestens ein Strahlungsheizkörper einsetzbar.

Der Dampfbehandlungseinsatz kann auch mindesten eine, insbesondere herausnehmbare, Gargutablage aufweisen.

Es ist eine Ausgestaltung, dass der Dampfbehandlungseinsatz nur einen elektrischen Anschluss aufweist.

Es ist eine Ausgestaltung, dass die Heizung in dem oder an einer Unterseite des Flüssigkeitsbehälters angeordnet ist.

Die Heizung ist dazu angeordnet und eingerichtet, den Flüssigkeitsbehälter zu heizen.

Es ist eine Ausgestaltung, dass der Dampfbehandlungseinsatz einen Temperatursensor oder Temperaturmesseinrichtung aufweist.

Es ist noch eine Ausgestaltung, dass der Dampfbehandlungseinsatz einen Feuchtesensor oder Feuchtemesseinrichtung aufweist.

Der Dampfbehandlungseinsatz ist so ausgestaltet, dass der Temperatursensor und/oder der Feuchtesensor ihre Messdaten an das Gargerät übermitteln können. Dies kann drahtgebunden, z.B. über den elektrischen Anschluss oder einen von außen zugänglichen eigenen Messanschluss geschehen. Alternativ können die Messdaten drahtlos an das Gargerät übertragen werden, z.B. mittels eines zugehörigen Senders (der z.B. über den elektrischen Anschluss mit Strom versorgbar ist) oder mittels einer Fernabfrage durch das Gargerät.

Mittels der Messdaten kann ein Gargerät eine Leistung der Heizung und damit eine Dampfmenge regeln, insbesondere mittels einer entsprechend eingerichteten Steuereinheit, z.B. Herdelektronik.

Es ist auch eine Ausgestaltung, dass der Dampfbehandlungseinsatz ein (nicht direkt beheiztes) Flüssigkeitsreservoir aufweist, aus dem der (direkt beheizbare) Flüssigkeitsbehälter mit Flüssigkeit speisbar ist.

Es ist ferner eine Ausgestaltung, dass Flüssigkeit aus dem Flüssigkeitsreservoir in den Flüssigkeitsbehälter nachströmen kann, wobei eine fluidische Verbindung zwischen dem Flüssigkeitsreservoir und dem Flüssigkeitsbehälter einen hohen Strömungswiderstand aufweist. Der Strömungswiderstand kann insbesondere so hoch sein, dass das Nachströmen zum Ersetzen von verdampftem Wasser in dem Flüssigkeitsbehälter ausreicht, aber keinen im Wesentlichen freien Flüssigkeitsaustausch zwischen dem Flüssigkeitsbehälter und dem Flüssigkeitsreservoir zulässt. So wird ein selbsttätiges Nachfüllen des Flüssigkeitsbehälters erreicht, aber verhindert, dass in dem Flüssigkeitsbehälter aufgeheiztes Wasser in signifikanter Menge in das Flüssigkeitsreservoir strömen kann. Dadurch wiederum wird ein vergleichsweise energiesparendes Aufheizen nur der Flüssigkeit in dem Flüssigkeitsbehälter erreicht.

Es ist eine Weiterbildung, dass der Flüssigkeitsbehälter und das Flüssigkeitsreservoir durch eine Trennwand abgetrennt sind, wobei die Trennwand beispielsweise mindestens einen schmalen Spalt oder eine dünne Bohrung zur Verbindung des Flüssigkeitsbehälters und des Flüssigkeitsreservoirs aufweisen kann. Der Flüssigkeitsbehälter und das Flüssigkeitsreservoir können insbesondere in einer gleichen Schale untergebracht sein.

Alternativ mag der Dampfbehandlungseinsatz eine elektrische Pumpe zum Pumpen von Flüssigkeit aus dem Flüssigkeitsreservoir in den Flüssigkeitsbehälter aufweisen.

Es ist außerdem eine Ausgestaltung, dass das Flüssigkeitsreservoir ein Aufnahmevolumen zwischen 1 Liter und 2 Litern aufweist, insbesondere von ca. 1,5 Litern.

Es ist darüber hinaus eine Ausgestaltung, dass der Dampfbehandlungseinsatz ein Überdruckventil aufweist. So kann beispielsweise ein Übermaß an Dampf in dem Dampfbehandlungseinsatz einfach verhindert werden.

Das Überdruckventil kann beispielsweise als eine Durchlassöffnung mit einem vorbestimmten Durchmesser ausgebildet sein. Es ist eine Weiterbildung, dass die Durchlassöffnung ein Ventilelement aufweist. Es ist ferner eine Ausgestaltung, dass das Ventilelement eine federnd gelagerte Andruckklappe aufweist. Die federnd gelagerte Andruckklappe ist zuverlässig und preiswert als auch leicht reinigbar.

Es ist auch eine Ausgestaltung, dass das Überdruckventil einen Überdruck von ca. 1 mbar bis ca. 5 mbar zulässt. Dieser Überdruck ermöglicht eine gute Befüllung des Dampfbehandlungseinsatzes mit Dampf und verändert ein Garverhalten im Vergleich zu einer drucklosen Dampfbeaufschlagung nicht.

Es ist eine alternative Ausgestaltung, dass das Überdruckventil einen Überdruck von bis zu ca. 1 bar zulässt. Dadurch kann ein Garablauf verkürzt werden und eine einem Schnellgaren ähnliche Funktion bereitgestellt werden.

Es ist eine Weiterbildung, dass das das Überdruckventil austauschbar ist und so beispielsweise ein Überdruckventil für einen geringen Überdruck (z.B. von ca. 1 mbar bis ca. 5 mbar) gegen ein Überdruckventil für einen höheren Druck (z.B. von bis zu ca. 1 bar) austauschbar ist, und umgekehrt.

Es ist noch eine Ausgestaltung, dass das Unterteil dazu vorgesehen ist, die Heizung, den elektrischen Anschluss und den Flüssigkeitsbehälter aufzunehmen.

Diese Ausgestaltung bewirkt eine gut kontrollierbare Dampfatmosphäre in dem Dampfbehandlungseinsatz. Der Deckel ist bevorzugt formschlüssig auf das Unterteil auflegbar. Der Deckel und das Unterteil sind bevorzugt mittels einer Dichtung abdichtbar. In dem Deckel sind bevorzugt, falls vorhanden, der Temperatursensor und/oder der Feuchtesensor vorhanden. Dann kann zwischen dem Unterteil und dem Boden vorzugsweise eine elektrische Verbindung bestehen, insbesondere bei geschlossenem Deckel, um Sensorsignale an den elektrischen Anschluss zu leiten.

Es ist noch eine weitere Ausgestaltung, dass der Dampfbehandlungseinsatz ein Unterteil und einen Deckel zum dampfdichten Abdecken des Unterteils aufweist, welche im Wesentlichen aus Glas und/oder Kunststoff bestehen.

Die Flüssigkeit kann insbesondere Wasser mit oder ohne Zusätze (z.B. Aromen) sein.

Ein zur Verwendung des Dampfbehandlungseinsatzes geeignetes Gargerät weist mindestens einen an den elektrischen Anschluss des Dampfbehandlungseinsatzes passenden elektrischen Anschluss auf. Der elektrische Anschluss des Gargeräts kann insbesondere auch zur Stromversorgung anderer elektrisch betreibbarer Einsatzgeräte geeignet und vorgesehen sein, z.B. zum Anschluss eines Garraumteilers oder eines beheizbaren Backblechs. Der elektrische Anschluss des Gargeräts kann insbesondere in einer Rückwand eines Garraumgehäuses, z.B. einer Garraummuffel oder eines Backrohrs, angeordnet sein.

In den folgenden Figuren wird die Erfindung anhand eines Ausführungsbeispiels schematisch genauer beschrieben. Dabei können zur Übersichtlichkeit gleiche oder gleichwirkende Elemente mit gleichen Bezugszeichen versehen sein.
- Fig.1: zeigt als Schnittdarstellung in Seitenansicht ein Gargerät mit einem in dessen Garraum eingesetzten Dampfbehandlungseinsatz; und
- Fig.2: zeigt den als Schnittdarstellung in Seitenansicht den Dampfbehandlungseinsatz in einer detaillierteren Ansicht.

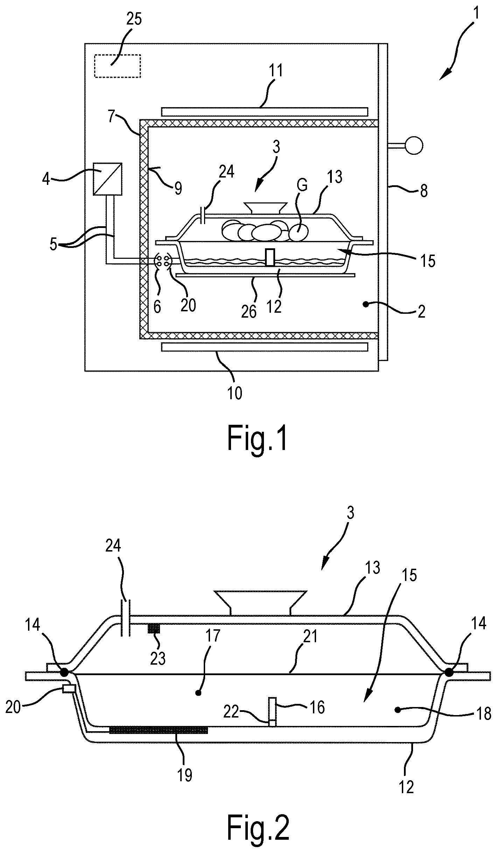

**Fig.1** zeigt ein Gargerät 1 mit einem in dessen Garraum 2 eingesetzten Dampfbehandlungseinsatz 3. Das Gargerät 1 kann beispielsweise ein Backofen, ein Mikrowellengerät oder ein Backofen mit einer Mikrowellenfunktionalität sein. Der Dampfbehandlungseinsatz 3 kann beispielsweise auf einen Gitterrost 26 oder ein Backblech abgelegt werden, was eine besonders flexible Positionierung ermöglicht. **Fig.2** zeigt den Dampfbehandlungseinsatz 3 in einer detaillierteren Ansicht.

Das Gargerät 1 weist eine Energieversorgungseinrichtung 4 zum Versorgen des Dampfbehandlungseinsatzes 3 mit einem elektrischen Signal (Strom, Spannung, elektrische Leistung usw.) auf. Die Energieversorgungseinrichtung 4 ist dazu über elektrische Leitungen 5 mit einem elektrischen Anschluss 6 verbunden, wobei der elektrische Anschluss 6 von dem Garraum 2 aus zugänglich ist. Der Garraum 2 wird durch eine Garmuffel 7 und eine Tür 8 begrenzt, wobei hier der elektrische Anschluss 6 des Gargeräts 1 in einer Rückwand 9 der Garmuffel 7 angeordnet ist. An einer Unterseite der Garmuffel 7 ist eine Unterhitze 10 aufweisend einen oder mehrere Unterhitzeheizkörper vorhanden, und an einer Oberseite der Garmuffel 7 ist eine Oberhitze 11 aufweisend einen oder mehrere Oberhitzeheizkörper vorhanden.

Der Dampfbehandlungseinsatz 3 weist ein Unterteil 12 oder Bodenteil aus Glas oder Kunststoff auf, auf welches ein Deckel 13 aus Glas oder Kunststoff dampfdicht aufsetzbar ist. Dazu können beispielsweise das Unterteil 12 und/oder der Deckel 13 an seinem Auflagerand eine umlaufende Dichtung 14 aufweisen. Das Unterteil 12 weist an seiner Oberseite eine schalenförmige Vertiefung 15 auf.

Die schalenförmige Vertiefung 15 ist mittels einer Trennwand 16 in zwei Teilbereiche unterteilt, nämlich einen als heizbaren Flüssigkeitsbehälter dienenden Verdampfungsbereich 17 und einen als ein Flüssigkeitsreservoir 18 dienenden Bereich. Das Flüssigkeitsreservoir 18 ist mit dem Verdampfungsbereich 17 nach dem Prinzip kommunizierender Röhren fluidisch verbunden, so dass der Verdampfungsbereich 17 aus dem Flüssigkeitsreservoir 18 mit Flüssigkeit speisbar ist. Dazu ist an einem unteren Rand der Trennwand 16 als eine fluidische Verbindung mindestens ein den Verdampfungsbereich 17 und das Flüssigkeitsreservoir 18 verbindender Flüssigkeitskanal 22 vorhanden. Der Flüssigkeitskanal 22 ist hier als ein schmaler Spalt oder eine dünne Bohrung ausgebildet, so dass er einen vergleichsweise hohen Strömungswiderstand aufweist. Das Flüssigkeitsreservoir 18 weist ein maximales Aufnahmevolumen oder Fassungsvolumen zwischen 1 Liter und 2 Litern auf, insbesondere von ca. 1,5 Litern.

Das Unterteil 12 ist als ein doppelbödiger Körper ausgestaltet, wobei unterhalb des Verdampfungsbereichs 17, aber nicht unterhalb des Flüssigkeitsreservoirs 18, eine Heizung in Form einer Flächenheizung 19 vorhanden ist. Diese Flächenheizung 19 kann einen Boden des Verdampfungsbereichs 17 so weit aufheizen, dass darin befindliche Flüssigkeit, insbesondere Wasser, verdampfen kann. Die Flächenheizung 19 kann insbesondere eine Dünnschicht- oder Dickschichtheizung sein und z.B. mäander- oder spiralförmige, flache Heizbahnen oder Heizbänder aufweisen. Die Flächenheizung 19 kann insbesondere flächig an der Vertiefung 15 aufgebracht sein, ggf. über eine elektrische Isolierschicht, z.B. durch ein Siebdruckverfahren oder ein Plasmabeschichten. Die Flächenheizung 19 ist elektrisch mit einem elektrischen Anschluss 20 verbunden, welcher mit dem elektrischen Anschluss 6 des Gargeräts 1 verbindbar ist. Das Unterteil 12 trägt ferner eine dampfdurchlässige, insbesondere entnehmbare, Gargutablage 21, hier in Form eines gelochten Gitterrosts, welcher sich oberhalb des Verdampfungsbereichs 17 befindet. Die Trennwand 16 liegt tiefer als die Gargutablage 21, so dass zwischen der Gargutablage 21 und der Trennwand 16 ein breiter Spalt vorhanden ist.

Der Dampfbehandlungseinsatz 3 weist in seinem Deckel 13 einen Temperatursensor und/ oder einen Feuchtesensor 23 auf, welcher elektrisch mit dem elektrischen Anschluss 20 verbunden ist. Der elektrische Anschluss 20 kann dazu einen oder mehrere elektrische Kontakte zur Verbindung mit dem Temperatursensor und/ oder dem Feuchtesensor 23 aufweisen. Auch ist folglich bei aufgesetztem Deckel 13 mindestens eine elektrische Verbindung zu dem Unterteil 12 zur Durchleitung der elektrischen Verbindung(en) zwischen dem Temperatursensor und/ oder dem Feuchtesensor 23 und dem elektrischen Anschluss 20 vorhanden, z.B. durch randseitige Kontaktflächen oder eine Steckerverbindung.

Der Deckel 13 weist ferner ein Überdruckventil 24 auf, um eine vollständige Füllung des Dampfbehandlungseinsatzes 3 zu erleichtern. Das Überdruckventil 24 kann hier einen Überdruck von 1 mbar bis 5 mbar halten.

Im Betrieb können beispielsweise zunächst der Verdampfungsbereich 17 und das Flüssigkeitsreservoir 18 bei abgenommener Gargutablage 21 mit Flüssigkeit, insbesondere Wasser, gefüllt werden, dann die Gargutablage 21 auf das Unterteil 12 aufgesetzt werden, dann mit Dampf zu behandelndes Gargut G auf der Gargutablage 21 abgelegt werden und dann der Deckel 13 dampfdicht auf das Unterteil 12 aufgesetzt werden. Im Folgenden kann der so befüllte Dampfbehandlungseinsatz 3 in den Garraum 2 eingesetzt und mit einem elektrischen Anschluss 20 an den elektrischen Anschluss 6 des Gargeräts 1 angeschlossen werden. Dadurch sind die Flächenheizung 19 mit der Energieversorgungseinrichtung 4 und der Temperatursensor und/ oder der Feuchtesensor 23 an eine Steuereinrichtung 25 des Gargeräts 1 elektrisch gekoppelt. Das Gargerät 1 kann den Anschluss des Dampfbehandlungseinsatzes 3 selbsttätig erkennen, oder dies kann dem Gargerät 1 durch einen Nutzer mitgeteilt werden. Das Gargerät 1 kann dazu eingerichtet sein, den elektrischen Anschluss 6 nur dann zu aktivieren, wenn ein Einsatz daran angeschlossen ist und die Tür 8 geschlossen ist.

Mit einer Aktivierung eines Dampfgarprogramms durch einen Nutzer oder programmgesteuert steuert die Steuereinrichtung 25 eine in die Flächenheizung 19 eingeprägte Leistung und kann mittels des Temperatursensors und/ oder mittels des Feuchtesensors 23 eine Temperatur und/oder Feuchte am Ort des Garguts abfühlen und für eine Leistungsregelung verwenden. Durch die aktivierte Flächenheizung 19 wird die Flüssigkeit in dem Verdampfungsbereich 17 erhitzt und so Dampf erzeugt. Der Dampf steigt durch die Gargutablage 21 auf und umhüllt das Gargut G zu dessen Behandlung, z.B. zum Dampfgaren.

Die Flüssigkeit in dem Flüssigkeitsreservoir 18 wird nicht oder nur geringfügig verdampft. Durch den nur kleinen, bodennahen Flüssigkeitskanal 22 fließt keine erhitzte Flüssigkeit von dem Dampferzeugungsbereich 17 in das Flüssigkeitsreservoir 18, vielmehr strömt kältere Flüssigkeit aus dem Wasserreservoir 18 in den Verdampfungsbereich, um einen durch die Verdampfung abnehmenden Flüssigkeitspegel in dem Verdampfungsbereich 17 auszugleichen. Überschüssiger Dampf kann durch das Überdruckventil 24 austreten und beispielsweise durch einen üblichen Garraumabzug, z.B. Wrasenabzug, (o.Abb.) aus dem Garraum 2 abgeleitet werden. Mit einer Beendigung des Garvorgangs kann die Flächenheizung 19 deaktiviert werden, der Dampfbehandlungseinsatz 3 von dem elektrischen Anschluss 6 abgekoppelt werden und der Dampfbehandlungseinsatz 3 dann aus dem Garraum 2 entnommen werden.

Selbstverständlich ist die vorliegende Erfindung nicht auf die gezeigten Ausführungsbeispiele beschränkt.

### Bezugszeichenliste

- 1: Gargerät
- 2: Garraum
- 3: Dampfbehandlungseinsatz
- 4: Energieversorgungseinrichtung
- 5: elektrische Leitung
- 6: elektrischer Anschluss
- 7: Garmuffel
- 8: Tür
- 9: Rückwand
- 10: Unterhitze
- 11: Oberhitze
- 12: Unterteil
- 13: Deckel
- 14: Dichtung
- 15: Vertiefung
- 16: Trennwand
- 17: Verdampfungsbereich
- 18: Flüssigkeitsreservoir
- 19: Flächenheizung
- 20: elektrischer Anschluss
- 21: Gargutablage
- 22: Flüssigkeitskanal
- 23: Feuchtesensor
- 24: Überdruckventil
- 25: Steuereinrichtung
- 26: Gitterrost
- G: Gargut

## Patentansprüche

1. Gargerät (1) mit einem in dessen Garraum (2) eingesetzten Dampfbehandlungseinsatz (3), wobei der Dampfbehandlungseinsatz (3) ein Unterteil (12) und einen Deckel (13) zum dampfdichten Abdecken des Unterteils (12), eine Heizung (19), einen mit der Heizung (19) verbundenen elektrischen Anschluss (20) und einen offenen Flüssigkeitsbehälter (17) aufweist, wobei
- das Gargerät (1) eine Energieversorgungseinrichtung (4) zum Versorgen des Dampfbehandlungseinsatzes (3) mit einem elektrischen Signal aufweist,
- die Heizung (19) eine Flüssigkeitsbehälter-Heizung zum Verdampfen von in dem Flüssigkeitsbehälter (17) befindlicher Flüssigkeit ist, und
- der Dampfbehandlungseinsatz (3) frei von Dampfzuführungen ist.

2. Gargerät (1) nach Anspruch 1, **dadurch gekennzeichnet, dass** die Heizung (19) dazu angeordnet und eingerichtet ist, den Flüssigkeitsbehälter (17) zu heizen, um darin befindliche Flüssigkeit zu verdampfen.

3. Gargerät (1) nach einem der vorhergehenden Ansprüche, **dadurch gekennzeichnet, dass** der Dampfbehandlungseinsatz (3) nur einen elektrischen Anschluss (20) aufweist.

4. Gargerät (1) nach einem der vorhergehenden Ansprüche, **dadurch gekennzeichnet, dass** die Heizung (19) in dem oder an einer Unterseite des Flüssigkeitsbehälters (17) angeordnet ist.

5. Gargerät (1) nach einem der vorhergehenden Ansprüche, **dadurch gekennzeichnet, dass** der Dampfbehandlungseinsatz (3) einen Temperatursensor aufweist.

6. Gargerät (1) nach einem der vorhergehenden Ansprüche, **dadurch gekennzeichnet, dass** der Dampfbehandlungseinsatz (3) einen Feuchtesensor (23) aufweist.

7. Gargerät (1) nach einem der vorhergehenden Ansprüche, **dadurch gekennzeichnet, dass** der Dampfbehandlungseinsatz (3) ein Flüssigkeitsreservoir (18) aufweist, aus dem der heizbare Flüssigkeitsbehälter (17) mit Flüssigkeit speisbar ist.

8. Gargerät (1) nach Anspruch 7, **dadurch gekennzeichnet, dass** Flüssigkeit aus dem Flüssigkeitsreservoir (18) in den Flüssigkeitsbehälter (17) nachströmen kann, wobei eine fluidische Verbindung (22) zwischen dem Flüssigkeitsreservoir (18) und dem Flüssigkeitsbehälter (17) einen hohen Strömungswiderstand aufweist.

9. Gargerät (1) nach einem der Ansprüche 7 bis 8, wobei der Flüssigkeitsbehälter (17) und das Flüssigkeitsreservoir (18) durch eine Trennwand abgetrennt sind, welche Trennwand (16) mindestens einen Flüssigkeitskanal (22) zur Verbindung des Flüssigkeitsbehälters (17) und des Flüssigkeitsreservoirs (18) aufweist.

10. Gargerät (1) nach einem der Ansprüche 7 bis 9, wobei der Flüssigkeitsbehälter (17) und das Flüssigkeitsreservoir (18) in einer gleichen Schale untergebracht sind.

11. Gargerät (1) nach einem der vorhergehenden Ansprüche, **dadurch gekennzeichnet, dass** das Flüssigkeitsreservoir (18) ein Aufnahmevolumen zwischen 1 Liter und 2 Litern aufweist, insbesondere von ca. 1,5 Litern.

12. Gargerät (1) nach einem der vorhergehenden Ansprüche, **dadurch gekennzeichnet, dass** der Dampfbehandlungseinsatz (3) ein Überdruckventil (24) aufweist.

13. Gargerät (1) nach einem der vorhergehenden Ansprüche, **dadurch gekennzeichnet, dass** das Unterteil (12) dazu vorgesehen ist, die Heizung (19), den elektrischen Anschluss (20) und den Flüssigkeitsbehälter (17) aufzunehmen.

14. Gargerät (1) nach einem der vorhergehenden Ansprüche, **dadurch gekennzeichnet, dass** der Dampfbehandlungseinsatz (3) ein Unterteil (12) und einen Deckel (13) zum dampfdichten Abdecken des Unterteils (12) aufweist, welche im Wesentlichen aus Glas und/oder Kunststoff bestehen.

## Claims

1. Cooking appliance (1) with a steam treatment insert (3) inserted into the cooking compartment (2)thereof, wherein the steam treatment insert (3) has a lower part (12) and a cover (13) to cover the lower part (12) in a steam-tight manner, a heater (19), an electrical connector (20) connected to the heater (19) and an open liquid container (17), wherein
- the cooking appliance (1) has an energy supply facility (4) for supplying the steam treatment insert (3) with an electrical signal,
- the heater (19) is a liquid container heater for evaporating liquid located in the liquid container (17), and
- the steam treatment insert (3) is free from steam supply systems.

2. Cooking appliance (1) according to claim 1, **characterised in that** the heater (19) is disposed and set up to heat the liquid container (17), in order to evaporate liquid located therein.

3. Cooking appliance (1) according to one of the preceding claims, **characterised in that** the steam treatment insert (3) has only one electrical connector (20).

4. Cooking appliance (1) according to one of the preceding claims, **characterised in that** the heater (19) is disposed in or on a lower face of the liquid container (17).

5. Cooking appliance (1) according to one of the preceding claims, **characterised in that** the steam treatment insert (3) has a temperature sensor.

6. Cooking appliance (1) according to one of the preceding claims, **characterised in that** the steam treatment insert (3) has a humidity sensor (23).

7. Cooking appliance (1) according to one of the preceding claims, **characterised in that** the steam treatment insert (3) has a liquid reservoir (18), from which the heatable liquid container (17) can be supplied with liquid.

8. Cooking appliance (1) according to claim 7, **characterised in that** liquid can follow out of the liquid reservoir (18) into the liquid container (17), wherein a fluidic connection (22) between the liquid reservoir (18) and the liquid container (17) has a high flow resistance.

9. Cooking appliance (1) according to one of claims 7 to 8, wherein the liquid container (17) and the liquid reservoir (18) are separated by a separating wall, which separating wall (16) has at least one liquid channel (22) for connecting the liquid container (17) and the liquid reservoir (18).

10. Cooking appliance (1) according to one of claims 7 to 9, wherein the liquid container (17) and the liquid reservoir (18) are accommodated in the same dish.

11. Cooking appliance (1) according to one of the preceding claims, **characterised in that** the liquid reservoir (18) has a capacity of between 1 litre and 2 litres, in particular of approx. 1.5 litres.

12. Cooking appliance (1) according to one of the preceding claims, **characterised in that** the steam treatment insert (3) has a pressure relief valve (24).

13. Cooking appliance (1) according to one of the preceding claims, **characterised in that** the lower part (12) is provided to accommodate the heater (19), the electrical connector (20) and the liquid container (17).

14. Cooking appliance (1) according to one of the preceding claims, **characterised in that** the steam treatment insert (3) has a lower part (12) and a cover (13) to cover the lower part (12) in a steam-tight manner, these being made essentially of glass and/or plastic.

## Revendications

1. Appareil de cuisson (1) avec un insert de traitement à la vapeur (3) placé dans son espace de cuisson (2), dans lequel l'insert de cuisson à la vapeur (3) présente une partie inférieure (12) et un couvercle (13) pour la couverture étanche à la vapeur de la partie inférieure (12), un chauffage (19), un raccordement électrique (20) relié au chauffage (19) et un contenant à liquide ouvert (17), dans lequel
- l'appareil de cuisson (1) présente un dispositif d'alimentation en énergie (4) pour l'alimentation de l'insert de traitement à la vapeur (3) avec un signal électrique,
- le chauffage (19) est un chauffage de contenant à liquide pour l'évaporation du liquide se trouvant dans le contenant à liquide (17), et
- l'insert de traitement à la vapeur (3) est exempt d'alimentation de vapeur.

2. Appareil de cuisson (1) selon la revendication 1, **caractérisé en ce que** le chauffage (19) est disposé et aménagé pour chauffer le contenant à liquide (17), afin d'évaporer le liquide se trouvant à l'intérieur de celui-ci.

3. Appareil de cuisson (1) selon l'une des revendications précédentes, **caractérisé en ce que** l'insert de traitement à la vapeur (3) présente un seul raccordement électrique (20).

4. Appareil de cuisson (1) selon l'une des revendications précédentes, **caractérisé en ce que** le chauffage (19) est disposé dans ou sur le côté inférieur du contenant à liquide (17).

5. Appareil de cuisson (1) selon l'une des revendications précédentes, **caractérisé en ce que** l'insert de traitement à la vapeur (3) présente un capteur de température.

6. Appareil de cuisson (1) selon l'une des revendications précédentes, **caractérisé en ce que** l'insert de traitement à la vapeur (3) présente un capteur d'humidité (23).

7. Appareil de cuisson (1) selon l'une des revendications précédentes, **caractérisé en ce que** l'insert de traitement à la vapeur (3) présente un réservoir de liquide (18) au départ duquel le contenant à liquide pouvant être chauffé (17) peut être alimenté en liquide.

8. Appareil de cuisson (1) selon la revendication 7, **caractérisé en ce que** le liquide peut s'écouler du réservoir de liquide (18) dans le contenant à liquide (17), une liaison fluidique (22) entre le réservoir de liquide (18) et le contenant à liquide (17) présentant une résistance à l'écoulement élevée.

9. Appareil de cuisson (1) selon l'une des revendications 7 à 8, dans lequel le contenant à liquide (17) et le réservoir de liquide (18) sont séparés par une cloison de séparation, laquelle cloison de séparation (16) présente au moins un canal à liquide (22) afin de relier le contenant à liquide (17) et le réservoir de liquide (18).

10. Appareil de cuisson (1) selon l'une des revendications 7 à 9, dans lequel le contenant à liquide (17) et le réservoir de liquide (18) sont logés dans une même coque.

11. Appareil de cuisson (1) selon l'une des revendications précédentes, **caractérisé en ce que** le réservoir de liquide (18) présente une contenance située entre 1 litre et 2 litres, en particulier d'environ 1,5 litre.

12. Appareil de cuisson (1) selon l'une des revendications précédentes, **caractérisé en ce que** l'insert de traitement à la vapeur (3) présente une soupape de surpression (24).

13. Appareil de cuisson (1) selon l'une des revendications précédentes, **caractérisé en ce que** la partie inférieure (12) est prévue afin d'accueillir le chauffage (19), le raccordement électrique (20) et le contenant à liquide (17).

14. Appareil de cuisson (1) selon l'une des revendications précédentes, **caractérisé en ce que** l'insert de traitement à la vapeur (3) présente une partie inférieure (12) et un couvercle (13) pour la couverture étanche à la vapeur de la partie inférieure (12), lesquels sont essentiellement en verre et/ou plastique.
